# EUROPÄISCHE PATENTSCHRIFT

(11) **EP 1 927 836 B1**
(45) Veröffentlichungstag und Bekanntmachung des Hinweises auf die Patenterteilung: **05.11.2014**
(21) Anmeldenummer: 07121767.3
(22) Anmeldetag: 28.11.2007
(51) Int. Cl.: B25B 23/14, G01L 25/00

(54) **Betätigungsvorrichtung zum Prüfen von Drehmomentschlüsseln**
Actuating device for testing torque transmission keys
Dispositif d'actionnement destiné à vérifier des clés dynamométriques

(30) Priorität: 01.12.2006 DE 202006018352 U
(43) Veröffentlichungstag der Anmeldung: 04.06.2008
(73) Patentinhaber: Eduard Wille GmbH & Co KG, 42349 Wuppertal (DE)
(72) Erfinder: Schwafertz, Rainer, 42899, Remscheid (DE)
(74) Vertreter: Willems, Volker

(56) Entgegenhaltungen:
- DE-A1- 19 637 540
- US-A- 2 955 454
- US-A- 5 099 678
- US-A- 5 181 425
- US-A- 5 703 277

## Beschreibung

### Technisches Gebiet

Die Erfindung betrifft eine Betätigungsvorrichtung zum Prüfen von Drehmomentschlüsseln, enthaltend
a) einen Träger, zur Fixierung eines zu prüfenden Drehmomentschlüssels,
b) einen an dem Träger angeordneten Messwertaufnehmer, welcher mit dem Kopfstück des zu prüfenden Drehmomentschlüssels gekoppelt wird,
c) eine auf dem Träger angeordnete Griffhalterung zur Fixierung des Griffs des zu prüfenden Drehmomentschlüssels,
d) einen Auslenkmechanismus zum Erzeugen eines Drehmoments auf das Kopfstück des zu prüfenden Drehmomentschlüssels,
e) wobei der Auslenkmechanismus als Auslenkhebel ausgebildet ist, der auf das Kopfstück des zu prüfenden Drehmomentschlüssels wirkt, und der Träger gegenüber dem Auslenkhebel statisch vorgesehen ist,
f) die Griffhalterung aus zwei u-förmig angeordneten Zapfen oder einem wechselbaren Zapfen gebildet wird, und
g) wenigstens eine verschiebbare und drehbar gelagerte Hülse auf einem der Zapfen vorgesehen ist.

### Stand der Technik

Mit einem Drehmomentschlüssel kann ein vorgegebenes Drehmoment auf Verbindungselemente wie Schrauben oder Muttern ausgeübt werden. Dazu enthalten Weiteren auch Kopfstück genannt. Oft ist am Schlüsselkopf eine als Vierkantzapfen ausgebildete Kupplung zur Werkzeugaufnahme vorgesehen. Auf den Vierkantzapfen können verschiedene Steckwerkzeuge zum Drehen von Schrauben oder Muttern gesteckt werden. Eine von einem Benutzer in Betätigungsrichtung am Griff aufgebrachte Kraft wird von dem Schlüsselhebel auf den Schlüsselkopf übertragen und erzeugt durch das Steckwerkzeug ein Drehmoment an einer Schraube oder Mutter. Zum Messen des aufgebrachten Drehmoments weist der Drehmomentschlüssel eine Messvorrichtung auf. Durch weitere Vorrichtungen kann das gemessene Drehmoment kontinuierlich angezeigt oder ein Erreichen eines vorgegebenen Drehmoments signalisiert werden.

Die Messvorrichtung eines Drehmomentschlüssels unterliegt üblichen Verschleiß- und Ermüdungserscheinungen. Zur Kontrolle, ob ein von der Messvorrichtung gemessenes Drehmoment mit einem aufgebrachten Drehmoment übereinstimmt, muss der Drehmomentschlüssel von Zeit zu Zeit mit einer Betätigungsvorrichtung kalibriert und gegebenenfalls justiert werden. Dazu ist in der Betätigungsvorrichtung ein Träger mit einem Messwertaufnehmer und einer Griffhalterung vorgesehen. Das Kopfstück des Drehmomentschlüssels wird, beispielsweise mit dem Vierkantzapfen, fest mit dem Messwertaufnehmer gekoppelt. Der Griff des Drehmomentschlüssels wird durch die Griffhalterung fixiert.

Durch einen Auslenkmechanismus wird dann ein Drehmoment auf das Kopfstück des Drehmomentschlüssels erzeugt. Dieses Drehmoment wird von dem Messwertaufnehmer gemessen und mittels einer in der Betätigungsvorrichtung, z.B. am Messwertaufnehmer vorgesehenen Anzeige dargestellt. Das von dem Drehmomentschlüssel angezeigte Drehmoment oder ein, dem Drehmomentschlüssel vorgegebenes Drehmoment für eine Auslösung ist so durch einen Vergleich mit dem auf der Anzeige dargestellten Drehmoment überprüfbar.

Bei den bekannten Betätigungsvorrichtungen zum Prüfen von Drehmomentschlüsseln werden verschiedene Auslenkmechanismen zur Erzeugung eines Drehmoments verwendet. Prinzipiell sind zur Erzeugung eines Drehmoments am Kopfstück eines Drehmomentschlüssels zwei Varianten möglich. Entweder ist der Messwertaufnehmer drehbar an dem Träger befestigt und die Griflhalterung fest mit dem Träger verbunden, oder, umgekehrt, der Messwertaufnehmer ist fest mit dem Träger verbunden und die Griffhalterung ist beweglich am Träger montiert.

Die bekannten Betätigungsvorrichtungen mit einer gegenüber dem Träger beweglichen Griffhalterung enthalten einen Linearantrieb mit einer Spindel und einer Kurbel. Durch Drehen der Spindel mittels der Kurbel werden die Griffhalterung und damit auch der Griff des Drehmomentschlüssels rechtwinklig zum Träger ausgelenkt. Dadurch wird ein Drehmoment auf das am Messwertaufnehmer fixierten Kopfstück erzeugt. Der Drehmomentschlüssel wird dabei um die Achse des Messwertaufnehmers geschwenkt. Der Griff bewegt sich im Gegensatz zur linearen Bewegung der Griffhalterung kreisförmig und muss somit beweglich von der Griffhalterung gehalten werden.

Eine solche Anordnung hat den Nachteil, dass sich bei einem Prüfvorgang der Kraftangriffspunkt am Griff . Je mehr der Drehmomentschlüssel geschwenkt wird, desto weiter wandert der Kraftangriffspunkt zum äußeren Ende des Griffs. Dadurch ändert sich die Hebelarmlänge während eines Prüfvorgangs. Dieser Umstand führt zu Messfehlern bei einer Prüfung des Drehmomentschlüssels.

Weiterhin muss zum Einstellen der Betätigungsvorrichtung auf unterschiedlich große Drehmomentschlüssel die Griffhalterung zusammen mit dem Linearantrieb auf dem Träger verschoben werden. Bei sehr großen Drehmomentschlüsseln muss der Linearantrieb entsprechend groß dimensioniert sein, um eine erforderliche Auslenkung zu ermöglichen. Dadurch wird ein Aufbau einer solchen Betätigungsvorrichtung kompliziert und unhandlich.

Den Nachteil des sich ändernden Kraftangriffspunkts wird bei den bekannten Betätigungsvorrichtungen zum Prüfen eines Drehmomentschlüssels mit einer gegenüber dem Träger drehbaren Messwertaufnahme vermieden. Der Drehmomentschlüssel wird mit dem Kopfstück am Messwertaufnehmer arretiert und der Griff vom Griffhalter fixiert. In einer Variante wird dann über eine Kurbel und ein Getriebe ein Drehmoment auf den Messwertaufnehmer und das Kopfstück aufgebracht. Nachteilig bei diesen Betätigungsvorrichtungen ist das mit vielen Einzelteilen aufwendig aufgebaute Getriebe. Das Getriebe vergrößert zudem die Betätigungsvorrichtung, insbesondere in der Höhe. Betätigungsvorrichtungen ist das mit vielen Einzelteilen aufwendig aufgebaute Getriebe. Das Getriebe vergrößert zudem die Betätigungsvorrichtung, insbesondere in der Höhe.

In einer weiteren bekannten Ausführung der Betätigungsvorrichtung ist die Messwertaufnahme auf einem Unterbau montiert, an dem auch eine Spindel mit Kurbel als Linearantrieb befestigt ist. Der Träger ist drehbar an der Messwertaufnahme angebracht und kann mit der Kurbel und der Spindel verschwenkt werden. So wird zwar ein Getriebe vermieden, aber durch den zusätzlich erforderlichen Unterbau ist die Betätigungsvorrichtung ebenfalls aus vielen Einzelteilen aufgebaut. Zudem beansprucht die Betätigungsvorrichtung durch den Unterbau und den als Ganzes geschwenkten Träger entsprechend viel Arbeitsplatz.

Die US 5,181,425 beschreibt eine Betätigungsvorrichtung zum Prüfen von mechanisch anzeigenden Drehmomentschlüsseln mit einem schwenkbar am Schlüsselarm befestigten Griff. Die Vorrichtung enthält eine Griffhalterung, die zwei u-förmig angeordnete Zapfen aufweist. Auf beiden Zapfen ist jeweils eine drehbare, keilförmige Stütze vorgesehen. Die zueinander zeigenden, schmalen Seiten der Stützen enthalten jeweils eine Nut zur Aufnahme einer elastischen Platte. Eine der Platten ist L-förmig ausgebildet, um den Griff von unten zu stützen. Der vertikale Arm der L-förmigen Platte lässt sich in der Nut zur Höheneinstellung verschieben und mit einer Klemmschraube fixieren. Während der Griff des Drehmomentschlüssels an seiner Schwenkachse durch die Grifthalterung gehalten wird, ist der Schlüsselkopf mit einer Antriebsvorrichtung gekoppelt, über die ein vorgegebenes Drehmoment auf den Drehmomentschlüssel einwirkt.

In der DE 196 37 540 A1 wird eine Prüfvorrichtung für Drehmomentschlüssel dargestellt, bei der der Griff eines Drehmomentschlüssels zwischen zwei Spannbacken eingeklemmt wird. Die Spannbacken sind drehbar mit einem durch Schienen und Führungen in einer Ebene verschiebbaren Schiebeschlitten verbunden. Während das Kopfstück des Drehmomentschlüssels mit einem Messwertaufnehmer gekoppelt ist, lassen sich die Spannbacken mit dem eingeklemmten Griff durch einen Antrieb schwenken. Mit dem Messwertaufnehmer werden dabei aufgebrachte Drerunomente bzw. ein Auslösedrehmoment gemessen.

Die US 2,955,454 zeigt eine Betätigungsvorrichtung zum Prüfen von Drehmomentschlüsseln. Ein zu prüfender Drehmomentschlüssel wird auf einem Träger fixiert. Dabei wird ein an dem Träger angeordneter Messwertaufnehmer mit dem Kopfstück des zu prüfenden Drehmomentschlüssels gekoppelt. Dort wird ferner eine auf dem Träger angeordnete Griffhalterung offenbart. Die Griffhalterung dient zur Fixierung des Griffs des zu prüfenden Drehmomentschlüssels. Die Griffhalterung wird aus einem Ring gebildet. Ein Auslenkmechanismus, welcher ein Drehmoment auf das Kopfstück des zu prüfenden Drehmomentschlüssels erzeugt, wird aus einem Auslenkhebel gebildet, der auf das Kopfstück des zu prüfenden Drehmomentschlüssels wirkt. Der Träger verbleibt hier gegenüber dem Auslenkhebel statisch.

Die US 5,099,678 beschreibt eine Betätigungsvorrichtung zum Prüfen von Drehmomentschlüsseln. Ein zu prüfender Drehmomentschlüssel wird auf einem Träger fixiert. Dabei wird ein an dem Träger angeordneter Messwertaufnehmer mit dem Kopfstück des zu prüfenden Drehmomentschlüssels gekoppelt. Dort wird ferner eine auf dem Träger angeordnete Griffhalterung offenbart. Die Griffhalterung dient zur Fixierung des Griffs des zu prüfenden Drehmomentschlüssels. Die Griffhalterung wird aus einem wechselbaren Zapfen gebildet. Weiterhin wird ein Auslenkmechanismus beschrieben, welcher ein Drehmoment auf das Kopfstück des zu prüfenden Drehmomentschlüssels erzeugt. Der Auslenkmechanismus wird aus einem Auslenkhebel gebildet ist, der auf das Kopfstück des zu prüfenden Drehmomentschlüssels wirkt, Der Träger verbleibt hier gegenüber dem Auslenkhebel statisch. Insbesondere bei der US 5,099,678 und der US 2,955,454 entsteht das Problem, dass während eines Prüfvorgangs Querkräfte am Messwertaufnehmer auftreten. Diese Querkräfte können Messfehler verursachen.

In der US 5,703,277 wird eine weitere Vorrichtung zum Prüfen von Drehmomentschlüsseln offenbart. Ein zu prüfender Drehmomentschlüssel wird am Kopfstück mit einem Messwertaufnehmer gekoppelt und am Griff von einem Griffhalter gehalten. Über ein Getriebe wird manuell ein Drehmoment auf den Messwertaufnehmer am Kopfstück erzeugt. Die Griffhalterung enthält zwei senkrechte Zapfen, die an einem Schlitten gefestigt sind und eine horizontale Bewegung des Griffs bei einwirkendem Drehmoment verhindern. Der Schlitten ist auf einer Schiene parallel zur Längsachse des Drehmomentschlüssels verschiebbar angeordnet, um so die Griffhalterung auf die Länge des Drehmomentschlüssels einzustellen. Beide Zapfen ragen durch Löcher einer quaderförmigen Auflage, die den Griff von unten stützt. Von den Zapfen vertikal geführt, lässt sich die Auflage in der Höhe verstellen und durch eine Klemmschraube fixieren.

### Offenbarung der Erfindung

Aufgabe der Erfindung ist es daher, die genannten Nachteile des Standes der Technik zu vermeiden und mit einer unkompliziert und kompakt aufgebauten Vorrichtung ein genaues Prüfen eines Drehmomentschlüssels zu ermöglichen.

Erfindungsgemäß wird die Aufgabe dadurch gelöst, dass bei einer Betätigungsvorrichtung zum Prüfen von Drehmomentschlüsseln mit den Merkmalen der eingangs genannten Art
h) die Hülse am unteren Ende eine tellerförmige Auflagefläche zum senkrechten Halten des Griffs enthält und während einer Prüfung an dem Zapfen gegen Verschiebung fixierbar ist.

Die Erfindung beruht auf dem Prinzip, zur Prüfung eines Drehmomentschlüssels einen statischen Träger mit einem fest montierten Griffhalter und einem drehbar am Träger befestigten Messwertaufnehmer mit einem Auslenkhebel zu verwenden. Ein Kopfstück eines zu prüfenden Drehmomentschlüssels wird mittels einer Aufnahme des Messwertaufnehmers fest an diesem arretiert, während ein Griff des Drehmomentschlüssels von dem Griffhalter gegengehalten wird. Durch Krafteinwirkung auf den Auslenkhebel wird ein Drehmoment über den Messwertaufnehmer auf das Kopfstück aufgebracht. Das aufgebrachte Drehmoment wird dabei von dem Messwertaufnehmer gemessen und zur Prüfung mit dem, vom Drehmomentschlüssel angezeigten oder am Drehmomentschlüssel vorgegebenen Drehmoment verglichen.

Die Griffhalterung der Betätigungsvorrichtung wird zum Prüfen von Drehmomentschlüsseln aus zwei u-förmig angeordneten Zapfen oder einem wechselbaren Zapfen gebildet. Für den wechselbaren Zapfen sind zwei Aufnahmen in der Griffhalterung vorgesehen. Die Zapfen ermöglichen eine schnelle und unkomplizierte Fixierung des Griffs eines Drehmomentschlüssels. Außerdem ist eine Prüfung des Drehmomentschlüssels in beiden Drehrichtungen durchführbar. Der Griff wird dabei jeweils von dem entsprechenden Zapfen gegengehalten.

Dabei ist bei der erfindungsgemäßen Betätigungsvorrichtung mindestens eine verschiebbare und/oder drehbar gelagerte Hülse auf einem der Zapfen vorgesehen. Durch die Hülse wird ein zu prüfender Drehmomentschlüssel exakt senkrecht zum Messwertaufnehmer ausgerichtet. Dadurch werden Querkräfte am Messwertaufnehmer während eines Prüfvorgangs vermieden. Querkräfte können Messfehler verursachen. Mit Hilfe der Hülse werden solche Messfehler weitestgehend kompensiert. Die Prüfung eines Drehmomentschlüssels wird optimiert.

Da der Griffhalter bei einem Prüfvorgang nicht bewegt wird, verändert sich der Kraftangriffspurtkt bzw. Gegenhaltepunkt am Griff während der gesamten Prüfung nicht. Somit ist eine Messung mit gleichbleibender Hebelarmlänge möglich. Die Prüfung ist exakter durchführbar. Weiterhin wird durch die Verwendung eines Auslenkhebels kein Getriebe oder kein Mechanismus zum Schwenken des kompletten Trägers benötigt. Ein Aufbau der erfindungsgemäßen Betätigungsvorrichtung zum Prüfen von Drehmomentschlüsseln ist mit wenigen Einzelteilen kompakt und flach ausführbar. Wegen der wenigen Einzelteile ist der Aufbau ferner preiswert herstellbar und weniger störanfällig.

Eine bevorzugte Ausbildung der Betätigungsvorrichtung zum Prüfen von Drehmomentschlüsseln enthält eine Spindelvorrichtung, welche an dem Träger angeordnet ist. Dabei lenkt ein auf einer Spindel der Spindelvorrichtung angeordneter Mitnehmer bei Betätigung der drehbar gelagerten Spindel den Auslenkhebel aus. Durch die Untersetzung der Kurbel und der Spindel sind ein gleichmäßiges Anziehen und eine Feindosierung des Drehmoments unter minimalem Kraftaufwand des Benutzers möglich. Durch eine Verwendung von wenigen beweglichen Teilen ist die erfindungsgemäße Betätigungsvorrichtung sehr flach und kompakt realisierbar. Sie beansprucht wenig Arbeitsplatz und ist wegen der geringen Anzahl von beweglichen Einzelteilen auch weniger störanfällig bzw. wartungsbedürftig.

Die Spindel der Spindelvorrichtung ist in einer vorteilhaften Ausgestaltung der erfindungsgemäßen Betätigungsvorrichtung über einen Motor, wie beispielsweise einen Elektromotor, antreibbar ausgebildet. Der Einsatz eines Motors befreit den Benutzer von der Bedienung einer Kurbel und beugt so einer Ennüdung des Benutzers vor. Der Benutzer kann sich besser auf einen Prüfvorgang konzentrieren. Es werden Messfehler durch eine Unachtsamkeit des Benutzers, wie beispielsweise unterschiedliche Anzugsgeschwindigkeiten, vermieden. Durch eine geeignete Ansteuerung des Motors lassen sich Messvorgänge einfach automatisieren.

Gemäß einer weiteren vorteilhaften Ausgestaltung der erfindungsgemäßen Betätigungsvorrichtung ist auf dem Träger in Längsrichtung des zu fixierenden Drehmomentschlüssels eine verstellbar angeordnete Griffhalterung vorgesehen. Dadurch ist die Griffhalterung auf verschiedene Drehmomentschlüssel unterschiedlicher Länge einstellbar. Die Betätigungsvorrichtung lässt sich ohne großen Aufwand an verschieden lange Drehmomentschlüssel anpassen. Dabei wird gewährleistet, dass sich ein Kraftangriffspunkt bzw. Gegenhaltepunkt immer in der Mitte des Griffs befindet. So wird eine genaue und reproduzierbare Überprüfung eines Drehmomentschlüssels ermöglicht.

In einer besonders geeigneten Ausbildung der Erfindung ist eine Signalverarbeitungseinrichtung enthalten, welche die Messsignale des Messwertaufnehmers verarbeitet, insbesondere digitalisiert, in einem Speicher speichert und auf einer Anzeige anzeigt. geschwindigkeiten, vermieden. Durch eine geeignete Ansteuerung des Motors lassen sich Messvorgänge einfach automatisieren.

Gemäß einer weiteren vorteilhaften Ausgestaltung der erfindungsgemäßen Betätigungsvorrichtung ist auf dem Träger in Längsrichtung des zu fixierenden Drehmomentschlüssels eine verstellbar angeordnete Griffhalterung vorgesehen. Dadurch ist die Griffhalterung auf verschiedene Drehmomentschlüssel unterschiedlicher Länge einstellbar. Die Betätigungsvorrichtung lässt sich ohne großen Aufwand an verschieden lange Drehmomentschlüssel anpassen. Dabei wird gewährleistet, dass sich ein Kraftangriffspunkt bzw. Gegenhaltepunkt immer in der Mitte des Griffs befindet. So wird eine genaue und reproduzierbare Überprüfung eines Drehmomentschlüssels ermöglicht.

Die Griffhalterung wird in einer günstigen Ausbildung der Betätigungsvorrichtung zum Prüfen von Drehmomentschlüsseln aus zwei u-förmig angeordneten Zapfen oder einem wechselbaren Zapfen gebildet. Für den wechselbaren Zapfen sind zwei Aufnahmen in der Griffhalterung vorgesehen. Die Zapfen ermöglichen eine schnelle und unkomplizierte Fixierung des Griffs eines Drehmomentsschlüssels. Außerdem ist eine Prüfung des Drehmomentsschlüssels in beiden Drehrichtungen durchführbar. Der Griff wird dabei jeweils von dem entsprechenden Zapfen gegengehalten.

In einer besonders geeigneten Ausbildung der Erfindung ist eine Signalverarbeitungseinrichtung enthalten, welche die Messsignale des Messwertaufnehmers verarbeitet, insbesondere digitalisiert, in einem Speicher speichert und auf einer Anzeige anzeigt.

Eine Verarbeitung der Messsignale ermöglicht beispielsweise eine Berücksichtigung von systematischen Messfehlern während einer Prüfung. Dabei können digitalisierte Messwerte einfacher weiterverarbeitet, angezeigt und gespeichert werden. Durch eine kontinuierliche Darstellung von aufgebrachten Drehmomenten mittels einer Anzeige wird eine Feindosierung eines Drehmoments zur präzisen Prüfung eines Drehmomentschlüssels für einen Benutzer durchführbar. Das Speichern von gemessen Drehmomentwerten erleichtert dem Benutzer eine Protokollierung eines Prüfvorgangs und ermöglicht eine Archivierung von Prüfvorgängen mit das am Kopfstück eines Drehmomentschlüssels aufgebrachten Drehmomenten. Auslösende Drehmomentschlüssel sind durch eine Speicherung des maximal aufgebrachten Drehmoments vor einer Auslösung besser prüfbar.

Der Messwertaufnehmer weist in einer bevorzugten Ausgestaltung der Erfindung einen durch eine Ausnehmung des Trägers führenden Drehzapfen auf. Der Drehzapfen wird durch den Auslenkhebel ausgelenkt und überträgt ein Drehmoment über den Messwertaufnehmer auf ein Kopfstück eines Drehmomentschlüssels. Durch diesen unkomplizierten Auslenkmechanismus mit wenigen Einzelteilen wird ein kompakter und unempfindlicher Aufbau mit einer niedrigen Bauhöhe möglich. Weiterhin lässt sich die erfindungsgemäße Betätigungsvorrichtung entsprechend preiswert herstellen.

Als vorteilhafte Ausbildung der Erfindung hat sich erwiesen, wenn der Träger verlängerbar ausgebildet ist. Die erfindungsgemäße Betätigungsvorrichtung eignet sich durch einen verlängerten Träger auch zum Prüfen von sehr langen Drehmomentschlüsseln. Bei einem Prüfen von kleinen Drehmomentschlüsseln lässt sich die Vorrichtung entsprechend raumsparend einrichten und beansprucht weniger Arbeitsplatz. Ferner wird ein Transport der erfindungsgemäßen Betätigungsvorrichtung durch eine entsprechende Verkürzung des Trägers und der damit einhergehenden Platzersparnis erleichtert.

In einer weiteren bevorzugten Ausgestaltung der erfindungsgemäßen Betätigungsvorrichtung ist der Auslenkhebel mit dem an der Spindel angeordneten Mitnehmer beweglich gelagert ausgebildet. Beispielsweise kann der Auslenkhebel zwischen zwei Zapfen des Mitnehmers oder ein Mitnehmerzapfen in einem Langloch des Auslenkhebels beweglich angeordnet sein. Dadurch wird die lineare Bewegung des Mitnehmers auf die kreisförmige Bewegung des Auslenkhebels ohne großen konstruktiven Aufwand übertragen. Ein Aufbau der erfindungsgemäßen Betätigungsvorrichtung ist mit wenigen Komponenten kompakt und preiswert möglich.

Eine vorteilhafte Ausbildung der Erfindung sieht eine horizontale Ausrichtung der Betätigungsvorrichtung mit einer horizontalen Auslenkung des Auslenkhebels vor. Zur exakten Prüfung eines Drehmomentschlüssels muss dieser horizontal betätigt werden. Nur so sind Einflüsse der Gewichtskraft auf einen Prüfvorgang auszuschließen. Daher wird durch die horizontale Ausrichtung der Betätigungsvorrichtung eine Prüfung eines Drehmomentschlüssels noch genauer durchführbar.

In einer weiteren vorteilhaften Ausgestaltung der Erfindung ist der Auslenkmechanismus als Hebelkette mit mehreren Hebeln ausgebildet und/oder enthält eine kreissegmentförmige Zahnstange. Durch eine entsprechende Kraftwandlung mittels der Hebelkette bzw. kreissegmentförmiger Zahnstange ist die Erzeugung eines großen Drehmoments leichter oder eine Feindosierung eines Drehmoments präziser möglich. Die Prüfung eines Drehmomentschlüssels wird erleichtert.

Weitere Ausgestaltungen und Vorteile ergeben sich aus dem Gegenstand der abhängigen Ansprüche, sowie der Zeichnung mit der dazugehörigen Beschreibung.

### Kurze Beschreibung der Zeichnung

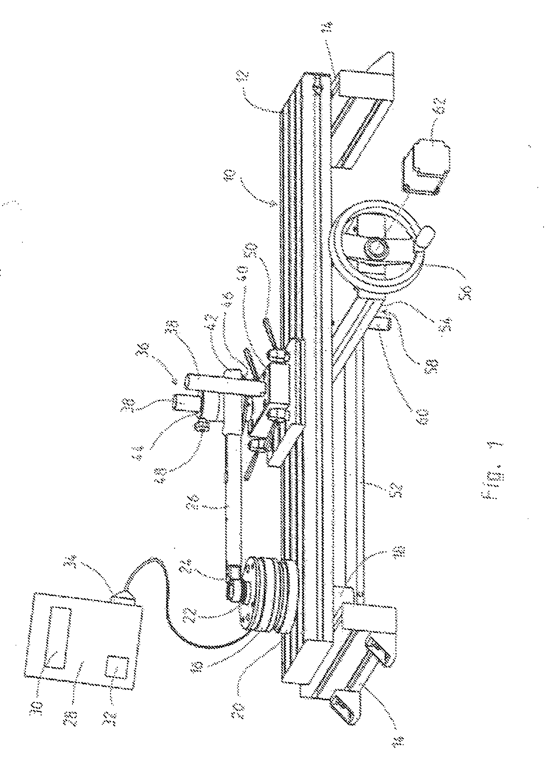

Fig. 1 zeigt in eine schematische Prinzipskizze ein Ausführungsbeispiel einer Betätigungseinrichtung zum Prüfen von Drehmomentschlüsseln.

### Bevorzugtes Ausführungsbeispiel

In Fig. 1 wird mit 10 eine Betätigungsvorrichtung zum Prüfen von Drehmomentschlüsseln bezeichnet. Die Betätigungsvorrichtung 10 enthält einen Träger 12 mit zwei - gegebenenfalls in der Höhe verstellbaren - Standfüßen 14. Diese gewährleisten einen sicheren und horizontalen Stand der Betätigungsvorrichtung 10 und können gegebenenfalls mit einer Unterlage verschraubt werden. Auf dem Träger 12 ist ein Messwertaufnehmer 16 drehbar montiert. Dazu weist der Messwertaufnehmer 16 einen Drehzapfen 18 auf, welcher durch eine Ausnehmung des Trägers 12 geführt ist und mit einer Lagerung 20 drehbar am Träger 12 gehalten wird. Weiterhin ist an dem Messwertaufnehmer 16 eine Aufnahme 22 vorgesehen. Durch die Aufnahme 22 wird ein Kopfstück 24 eines Drehmomentschlüssels 26 über einen Vierkantzapfen fest mit dem Messwertaufnehmer 16 gekoppelt. Alternativ sind auch Aufnahmen 22 für andere, am Kopfstück 24 befestigte Werkzeuge wählbar.

Vom Messwertaufnehmer 16 gemessene Drehmomentwerte werden an eine Signalverarbeitungseinrichtung 28 übertragen und dort verarbeitet und digitalisiert. Anschließend werden die gemessenen Drehmomentwerte mit einer Anzeige 30 dargestellt und in einem Speicher 32 zur Protokollierung und Archivierung gespeichert. Über eine Schnittstelle 34 können gemessene Drehmomentwerte an externe Geräte zur weiteren Verarbeitung übermittelt werden.

Weiterhin ist am Träger 12 eine Griffhalterung 36 mit zwei Zapfen 38 vorgesehen. Die Zapfen 38 sind über eine Brücke 40 u-förmig angeordnet. Je nach zu prüfender Drehrichtung dient einer der Zapfen 38 als Gegenhalter für einen Griff 42 eines Drehmomentschlüssels 26. In einer alternativen Ausführung enthält die Griffhalterung 36 einen wechselbaren Zapfen 38 und die Brücke 40 zwei Aufnahmen für den Zapfen 38. Je nach Drehrichtung wird der wechselbare Zapfen 38 in die entsprechenden Aufnahme geführt und hält den Griff 42 gegen. Dazu verfügt der entsprechende Zapfen 38 über eine verschiebbare und drehbare Hülse 44. Die Hülse 44 besitzt am unteren Ende eine tellerförmige Auflagefläche 46 zum Halten des Griffs 42 zu Beginn eines Prüfvorgangs. Mittels einer in Fig. 1 nicht dargestellten Büchse mit geringer Reibung, z.B. einer Kugelbüchse, ist die Hülse 44 leicht auf dem Zapfen 38 verschiebbar und kann mit einer Klemmschraube 48 an dem Zapfen 38 fixiert werden. Die Hülse 44 ermöglicht als Höhenausgleich eine senkrechte Fixierung des Drehmomentschlüssels 26 zum Messwertaufnehmer 16. Dies ist wichtig, um Querkräfte am Messwertaufnehmer 16 und dadurch verursachte Messfehler zu verhindern.

Die Brücke 40 wird mit lösbaren Arretiermitteln 50, wie beispielsweise von Hand bedienbaren Klemmhebel, an dem Träger 12 arretiert. Durch Lösen der Arretiermittel 50 kann die gesamte Griffhalterung 36 auf dem Träger 12 verschoben und so an die Größe eines Drehmomentschlüssels angepasst werden. Der Träger 12 ist verlängerbar ausgebildet, um bei Bedarf auch sehr lange Drehmomentschlüssel 26 mit der Betätigungsvorrichtung 10 prüfen zu können.

An dem, unten am Träger 10 herausragenden Drehzapfen 18 ist zum Erzeugen eines Drehmoments ein Ende eines Auslenkhebel 52 befestigt. Durch Auslenken des Auslenkhebels 52 wird über den Drehzapfen 18 und den Messwertaufnehmer 16 ein Drehmoment auf das Kopfstück 24 eines Drehmomentschlüssels 26 aufgebracht. Zum Auslenken des Auslenkhebels 52 ist eine Spindelvorrichtung 54 am Träger 12 angeordnet. Mit einer Kurbel 56 wird durch einen Benutzer eine drehbar gelagerte Spindel 58 getätigt. Die Spindel 58 treibt einen Mitnehmer 60 an, welcher beweglich mit dem anderen Ende des Auslenkhebels 52 verbunden ist und diesen auslenkt. Dazu verfügt der Mitnehmer 60 z.B. über einen Zapfen in einem Langloch des Auslenkhebels 52 oder über zwei Zapfen, zwischen denen das Ende des Auslenkhebels 52 gelagert ist.

Statt der Spindelvorrichtung 54 können auch andere Linearantriebe zur Betätigung des Auslenkhebels 52 vorgesehen werden. In einer weiteren Ausführung der Betätigungsvorrichtung 10 wird statt der Kurbel 56 zur manuellen Bedienung der Spindelvorrichtung 54 ein Motor 62, beispielsweise ein Elektromotor, verwendet.

Zum Prüfen eines Drehmomentschlüssels 26 mit der Betätigungsvorrichtung 10 wird zunächst je nach zu prüfender Drehrichtung die Hülse 44 auf den entsprechenden Zapfen 38 geschoben. Dann wird das Kopfstück 24 des Drehmomentschlüssels 26 an die Aufnahme 22 des Messwertaufnehmers 16 gekoppelt. Nach Lösen der Arretiermittel 50 wird die Griffhalterung 36 so auf dem Träger 12 verschoben und anschließend wieder arretiert, dass der Zapfen 38 mit der Hülse 44 den Griff 42 des Drehmomentschlüssels 26 in der Mitte gegenhält. Abschließend richtet sich die Hülse 44 durch Aufbringen eines geringen Drehmoments in der Höhe aus und wird mit der Klemmschraube 48 fixiert, sodass die Auflagefläche 46 den Griff 42 von unten stützt und senkrecht zur Achse des Messwertaufnehmers 16 hält.

Nach diesen Vorbereitungen erfolgt die eigentliche Prüfung des Drehmomentschlüssels 26. Durch Betätigen der Kurbel 56 oder des Motors 62 bringt der Benutzer über die Spindelvorrichtung 54, den Auslenkhebel 52, den Drehzapfen 18 und den Messwertaufnehmer 16 ein gleichmäßig vergrößerbares und feindosierbares Drehmoment an dem Kopfstück 24 des Drehmomentschlüssels 26 auf. Gleichzeitig wird das aufgebrachte Drehmoment von dem Messwertaufnehmer 16 gemessen und nach einer Verarbeitung durch die Signalverarbeitungseinrichtung 28 auf der Anzeige 30 dargestellt.

Der Benutzer kann jeder Zeit das aufgebrachte Drehmoment mit dem von dem Drehmomentschlüssel 26 angezeigten Drehmoment vergleichen und gegebenenfalls im Speicher 32 speichern. Für auslösende Drehmomentschlüssel 26 wird das maximal aufgebrachte Drehmoment automatisch im Speicher 32 gespeichert. Das erleichtert einen Vergleich des am Drehmomentschlüssel 26 vorgegebenen Drehmoments mit dem aufgebrachten Drehmoment bei einer Auslösung.

Anschließend wird der Drehmomentschlüssel 26 justiert und die Prüfung so oft wiederholt, bis eine Übereinstimmung der Drehmomentwerte in festgelegten Toleranzgrenzen erreicht ist. Für einen Ausdruck oder eine Archivierung eines Prüfprotokolls können die im Speicher 32 gespeicherten Drehmomentwerte über die Schnittstelle 34 an externe Geräte, beispielsweise einen Drucker, übertragen werden.

### Bezugszeichenliste

- 10: Betätigungsvorrichtung zum Prüfen eines Drehmomentschlüssels
- 12: Träger
- 14: Standfuß
- 16: Messwertaufnehmer
- 18: Drehzapfen
- 20: Lagerung
- 22: Aufnahme
- 24: Kopfstück eines Drehmomentschlüssels
- 26: Drehmomentschlüssel
- 28: Signalverarbeitungseinrichtung
- 30: Anzeige
- 32: Speicher
- 34: Schnittstelle
- 36: Griffhalterung
- 38: Zapfen
- 40: Brücke
- 42: Griff eines Drehmomentschlüssels
- 44: Hülse
- 46: Auflage
- 48: Klemmschraube
- 50: Arretiermittel
- 52: Auslenkhebel
- 54: Spindelvorrichtung
- 56: Kurbel
- 58: Spindel
- 60: Mitnehmer
- 62: Motor

## Patentansprüche

1. Betätigungsvorrichtung (10) zum Prüfen von Drehmomentschlüsseln (26), enthaltend
a) einen Träger (12), zur Fixierung eines zu prüfenden Drehmomentschlüssels (26),
b) einen an dem Träger (12) angeordneten Messwertaufnehmer (16), welcher mit dem Kopfstück (24) des zu prüfenden Drehmomentschlüssels (26) gekoppelt wird,
c) eine auf dem Träger (12) angeordnete Griffhalterung (36) zur Fixierung des Griffs (42) des zu prüfenden Drehmomentschlüssels (26),
d) einen Auslenkmechanismus (52) zum Erzeugen eines Drehmoments auf das Kopfstück (24) des zu prüfenden Drehmomentschlüssels (26),
e) wobei der Auslenkmechanismus (52) als Auslenkhebel (52) ausgebildet ist, der auf das Kopfstück (24) des zu prüfenden Drehmomentschlüssels (26) wirkt, und der Träger (10) gegenüber dem Auslenkhebel (52) statisch vorgesehen ist,
f) die Griffhalterung (36) aus zwei u-förmig angeordneten Zapfen (38) oder einem wechselbaren Zapfen (38) gebildet wird, und
g) wenigstens eine verschiebbare und drehbar gelagerte Hülse (44) auf einem der Zapfen (38) vorgesehen ist,
**dadurch gekennzeichnet, dass**
h) die Hülse (44) am unteren Ende eine tellerförmige Auflagefläche (46) zum senkrechten Halten des Griffs (42) enthält und während einer Prüfung an dem Zapfen (38) gegen Verschiebung fixierbar ist.

2. Betätigungsvorrichtung (10) zum Prüfen von Drehmomentschlüsseln (26) nach Anspruch 1, **gekennzeichnet durch** eine Spindelvorrichtung (54), welche an dem Träger (12) angeordnet ist, wobei ein auf einer Spindel (58) der Spindelvorrichtung (54) angeordneter Mitnehmer (60) bei Betätigung der drehbar gelagerten Spindel (58) den Auslenkhebel (52) auslenkt.

3. Betätigungsvorrichtung (10) zum Prüfen von Drehmomentschlüsseln (26) nach Anspruch 2, **dadurch gekennzeichnet, dass** die Spindel (58) der Spindelvorrichtung (54) über einen Motor (62), insbesondere Elektromotor, antreibbar ausgebildet ist.

4. Betätigungsvorrichtung (10) zum Prüfen von Drehmomentschlüsseln (26) nach einem der Ansprüche 1 bis 3, **gekennzeichnet durch** eine auf dem Träger (12) in Längsrichtung des zu fixierenden Drehmomentschlüssels (26) verstellbar angeordnete Griffhalterung (36) für Drehmomentschlüssel (26) unterschiedlicher Länge.

5. Betätigungsvorrichtung (10) zum Prüfen von Drehmomentschlüsseln (26) nach einem der Ansprüche 1 bis 4, **dadurch gekennzeichnet, dass** eine Signalverarbeitungseinrichtung (28) vorgesehen ist, welche die Messsignale des Messwertaufnehmers (16) verarbeitet, insbesondere digitalisiert, in einem Speicher (32) speichert und auf einer Anzeige (30) anzeigt.

6. Betätigungsvorrichtung (10) zum Prüfen von Drehmomentschlüsseln (26) nach einem der Ansprüche 1 bis 5, **dadurch gekennzeichnet, dass** der Messwertaufnehmer (16) einen durch eine Ausnehmung des Trägers (12) führenden Drehzapfen (18) aufweist, der durch den Auslenkhebel (52) angelenkt wird.

7. Betätigungsvorrichtung (10) zum Prüfen von Drehmomentschlüsseln (26) nach einem der Ansprüche 1 bis 6, **dadurch gekennzeichnet, dass** der Träger (12) verlängerbar ausgebildet ist.

8. Betätigungsvorrichtung (10) zum Prüfen von Drehmomentschlüsseln (26) nach einem der Ansprüche 2 bis 7, **dadurch gekennzeichnet, dass** der Auslenkhebel (52) mit dem an der Spindel (58) angeordneten Mitnehmer (60) beweglich gelagert ausgebildet ist.

9. Betätigungsvorrichtung (10) zum Prüfen von Drehmomentschlüsseln (26) nach einem der Ansprüche 1 bis 8, **dadurch gekennzeichnet, dass** eine horizontale Ausrichtung der Betätigungsvorrichtung (10) mit einer horizontalen Auslenkung des Auslenkhebels (52) vorgesehen ist.

10. Betätigungsvorrichtung (10) zum Prüfen von Drehmomentschlüsseln (26) nach einem der Ansprüche 1 bis 9; **dadurch gekennzeichnet, dass** der Auslenkmechanismus (52) als Hebelkette mit mehreren Hebeln und/oder als kreissegmentförmige Zahnstange ausgebildet ist.

## Claims

1. An actuating device (10) for testing torque wrenches (26) comprising:
a) a carrier (12) for fixing a torque wrench (26) to be tested,
b) a transducer (16) arranged at the carrier (12) which is coupled to the head portion (24) of the torque wrench (26) to be tested,
c) a grip holder (36) arranged at the carrier (12) for fixing the grip (42) of the torque wrench (26) to be tested,
d) a deflecting mechanism (52) for the generation of a torque on the head portion (24) of the torque wrench (26) to be tested,
e) wherein the deflecting mechanism (52) has the form of a deflecting lever (52) acting on the head portion (24) of the torque wrench (26) to be tested, and the carrier (12) is immobile with respect to the deflecting lever (52),
f) the grip holder (36) is formed by two pins (38) arranged in a u-shape or by a chargeable pin (38), and
(g) at least one shiftably and rotatably supported casing (44) is provided on one of the pins (38),
**characterized in that**
h) the casing 44 comprises a plate-shaped abutment surface 46 at its lower end for holding the grip 42 vertically and is fixable to the pin 38 against shifting during a testing procedure.

2. An actuating device (10) for testing torque wrenches (26) according to claim 1, **characterized by** a spindle device (54) arranged at the carrier (12), wherein a driver (60) arranged on a spindle (58) of the spindle device (54) deflects the deflecting lever (52) upon actuation of the rotatably supported spindle (58).

3. An actuating device (10) for testing torque wrenches (26), according to claim 2, **characterized in that** the spindle (58) of the spindle device (54) is adapted to be driven by a motor (62), such as an electromotor.

4. An actuating device (10) for testing torque wrenches (26) according to any one of claims 1 to 3, **characterized by** a grip holder (36) arranged on the carrier (12) adjustable in the longitudinal direction of the torque wrench (26) to be fixed for torque wrenches (26) having a different length.

5. An actuating device (10) for testing torque wrenches (26) according to any one of claims 1 to 4, **characterized in that** a signal processing unit (28) is provided which processes the measured signals of the transducer (16), in particular digitizes, stores in a storage (32) and displays the measured signals on a display (30).

6. An actuating device (10) for testing torque wrenches (26) according to any one of claims 1 to 5, **characterized in that** the transducer (16) is provided with a rotating pin (18) passing through a recess of the carrier (12), which is deflected by the deflecting lever (52).

7. An actuating device (10) for testing torque wrenches (26) according to any one of claims 1 to 6, **characterized in that** the carrier (12) is extendable.

8. An actuating device (10) for testing torque wrenches (26) according to any one of claims 2 to 7, **characterized in that** the deflecting lever (52) is moveably supported with the driver (60) arranged at the spindle (58).

9. An actuating device (10) for testing torque wrenches (26) according to any one of claims 1 to 8, **characterized in that** a horizontal alignment of the actuating device (10) with a horizontal deflection of the deflecting lever (52) is provided.

10. An actuating device (10) for testing torque wrenches (26) according to any one of claims 1 to 9, **characterized in that** the deflecting mechanism (52) is adapted as a lever chain with several levers and / or a toothed rack in the form of a segment of a circle.

## Revendications

1. Dispositif d'actionnement (10) destiné à vérifier des clés dynamométriques (26), comprenant
(a) un support (12) destiné à fixer une clé dynamométrique (26) à vérifier,
(b) un capteur de valeurs de mesure (16) disposé sur le support (12) et couplé à l'élément de tête (24) de la clé dynamométrique (26) à vérifier,
(c) une fixation de poignée (36) disposée sur le support (12) et destinée à fixer la poignée (42) de la clé dynamométrique (26) à vérifier,
(d) un mécanisme de déclenchement (52) destiné à générer un couple de rotation sur l'élément de tête (24) de la clé dynamométrique (26) à vérifier,
(e) le mécanisme de déclenchement (52) étant réalisé sous forme de levier de déclenchement (52) agissant sur l'élément de tête (24) de la clé dynamométrique (26) à vérifier, et le support (10) étant prévu de manière statique par rapport au levier de déclenchement (52),
(f) la fixation de poignée (36) étant formée de deux tourillons (38) disposés en forme de U ou d'un tourillon (38) pouvant être changé, et
(g) au moins une douille (44) logée de manière à pouvoir tourner et pouvant être déplacée étant prévue sur l'un des tourillons (38),
**caractérisé en ce que**
(h) la douille (44) comprend à l'extrémité inférieure une surface d'appui (46) en forme de plateau destinée à maintenir verticalement la poignée (42) et peut être fixée, au cours d'une vérification, sur le tourillon (38) de manière à empêcher à poignée de se déplacer.

2. Dispositif d'actionnement (10) destiné à vérifier des clés dynamométriques (26) selon la revendication 1, **caractérisé par** un dispositif à broche (54) disposé sur le support (12), un toc d'entraînement (60) disposé sur une broche (58) du dispositif à broche (54) déclenchant le levier de déclenchement (52) en cas d'actionnement de la broche (58) logée de manière à pouvoir tourner.

3. Dispositif d'actionnement (10) destiné à vérifier des clés dynamométriques (26) selon la revendications 2, **caractérisé en ce que** la broche (58) du dispositif à broche (54) est réalisée de manière à pouvoir être entraînée par un moteur (62), notamment un moteur électrique.

4. Dispositif d'actionnement (10) destiné à vérifier des clés dynamométriques (26) selon l'une quelconque des revendications 1 à 3, **caractérisé par** une fixation de poignée (36) pour clés dynamométriques (26) de différentes longueurs, disposée de manière à pouvoir se déplacer sur le support (12) dans le sens longitudinal de la clé dynamométrique (26) à fixer.

5. Dispositif d'actionnement (10) destiné à vérifier des clés dynamométriques (26) selon l'une des revendications 1 à 4, **caractérisé en ce qu'**il est prévu un dispositif de traitement de signaux (28) traitant les signaux de mesure du capteur de valeurs de mesure (16), les numérise notamment, les sauvegarde dans une mémoire (32) et les affiche sur un dispositif d'affichage (30).

6. Dispositif d'actionnement (10) destiné à vérifier des clés dynamométriques (26) selon l'une quelconque des revendications 1 à 5, **caractérisé en ce que** le capteur de valeurs de mesure (16) présente un tourillon (18) traversant un creux du support (12) et déclenché par le levier de déclenchement (52).

7. Dispositif d'actionnement (10) destiné à vérifier des clés dynamométriques (26) selon l'une des revendications 1 à 6, **caractérisé en ce que** le support (12) est réalisé de manière à pouvoir être rallongé.

8. Dispositif d'actionnement (10) destiné à vérifier des clés dynamométriques (26) selon l'une des revendications 2 à 7, **caractérisé en ce que** le levier de déclenchement (52) est réalisé de manière à être logé en se déplaçant avec le toc d'entraînement (60) disposé sur la broche (58).

9. Dispositif d'actionnement (10) destiné à vérifier des clés dynamométriques (26) selon l'une des revendications 1 à 8, **caractérisé en ce qu'**il est prévu un déclenchement horizontal du dispositif d'actionnement (10) avec un déclenchement horizontal du levier de déclenchement (52).

10. Dispositif d'actionnement (10) destiné à vérifier des clés dynamométriques (26) selon l'une des revendications 1 à 9, **caractérisé en ce que** le mécanisme de déclenchement (52) est réalisé sous forme de chaîne à effet de levier munie de plusieurs leviers et/ou sous forme de crémaillère en forme de segment de cercle.
